# EUROPEAN PATENT SPECIFICATION

(11) **EP 3 608 560 B1**
(45) Date of publication and mention of the grant of the patent: **14.10.2020**
(21) Application number: 18188272.1
(22) Date of filing: 09.08.2018
(51) Int. Cl.: F16H 57/04

(54) **LUBRICATION SYSTEM OF POWER ASSEMBLY OF ELECTRIC SCOOTER**
SCHMIERUNGSSYSTEM FÜR ANTRIEBSANORDNUNG EINES ELEKTROROLLERS
SYSTÈME DE LUBRIFICATION D'UN ENSEMBLE DE PUISSANCE DE SCOOTER ÉLECTRIQUE

(43) Date of publication of application: 12.02.2020
(73) Proprietor: Fukuta Electric & Machinery Co., Ltd., 429 Taichung City (TW)
(72) Inventor: CHANG, CHIN FENG, 428 Taichung City (TW); KE, HUNG CHUN, 509 Changhua County (TW)
(74) Representative: Cabinet Chaillot

(56) References cited:
- US-A1- 2007 272 196
- US-A1- 2012 152 636
- US-A1- 2018 031 078

## Description

### BACKGROUND OF THE INVENTION

### 1. Technical Field

The present invention relates to an electric scooter, and more particularly to a lubrication system of a power assembly of an electric scooter.

### 2. Description of Related Art

A conventional electric scooter is driven by an electric motor, and a gearbox is provided to transmit the power of the motor to the wheels. Since the electric motor and the gears of the gearbox are flowing in a high speed, they need lubricant lubrication and lowering temperature.

In the conventional electric scooter, the electric motor and the gearbox are two independent devices, so that two independent pipes from a pump to the electric motor and the gearbox respectively are provided for lubrication. Typically, the effect of lubrication decreases when a flowing distance of the lubricant increases. Furthermore, it usually generates bubbles when the lubricant is flowing in the pipe, and the bubble is bad for the effect of lubricant.

Document US 2018/031078 A1 discloses a lubrication system according to the preamble of claim 1.

### BRIEF SUMMARY OF THE INVENTION

In view of the above, the primary objective of the present invention is to provide a lubrication system of a power assembly of an electric scooter, which has a short lubricant flowing distance to increase the lubrication effect.

A secondary objective of the present invention is to provide a lubrication system of a power assembly of an electric scooter, which may eliminate bubbles in the lubricant quickly.

A third objective of the present invention is to provide a lubrication system of a power assembly of an electric scooter, which provides the lubricant to the meshed teeth of the driving and the driven gears.

In order to achieve the objective of the present invention, a lubrication system of a power assembly of an electric scooter includes the features of claim 1.

Lubricant flows to the case duct, the driven gear shaft duct, a driven gear bearing seat in the case, the bearing seat duct, a driving bearing seat in the case in sequence. The lubrication system of the present invention has a short flowing distance of the lubricant to enhance the effects of lubrication and reducing temperature.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is an exploded view of a preferred embodiment of the present invention;
FIG. 2 is a perspective view of the preferred embodiment of the present invention;
FIG. 3 is a perspective view of the driven gear of the preferred embodiment of the present invention;
FIG. 4 is a sectional view of the driven gear of the preferred embodiment of the present invention;
FIG. 5 is a perspective view of the base of the preferred embodiment of the present invention, showing the bearing seat duct;
FIG. 6 is an exploded view of the base of the preferred embodiment of the present invention, showing the bearing seat duct;
FIG. 7 is an enlarged view of the base of the preferred embodiment of the present invention, showing the stepped protrusion of the bearing seat duct;
FIG. 8 is an enlarged view of the base of the preferred embodiment of the present invention, showing the outlet of the stepped protrusion of the bearing seat duct and the lid;
FIG. 9 is a sectional view of the preferred embodiment of the present invention, showing the driven gear shaft, the driving shaft, and the bearing seat;
FIG. 10 is an enlarged view of the preferred embodiment of the present invention, showing the mesh of the driven gear shaft and the transmission gear;
FIG. 11 is a flowchart of the preferred embodiment of the present invention, showing the lubricant flowing route;
FIG. 12 is a sectional view of the preferred embodiment of the present invention, showing the filter device;
FIG. 13 is a sectional view of the preferred embodiment of the present invention, showing the lubricating duct of the lid, the lubricating duct of the case, and the lubricating duct of the driven gear shaft; and
FIG. 14 is a flowchart of the preferred embodiment of the present invention, showing another lubricant flowing route.

### DETAILED DESCRIPTION OF THE INVENTION

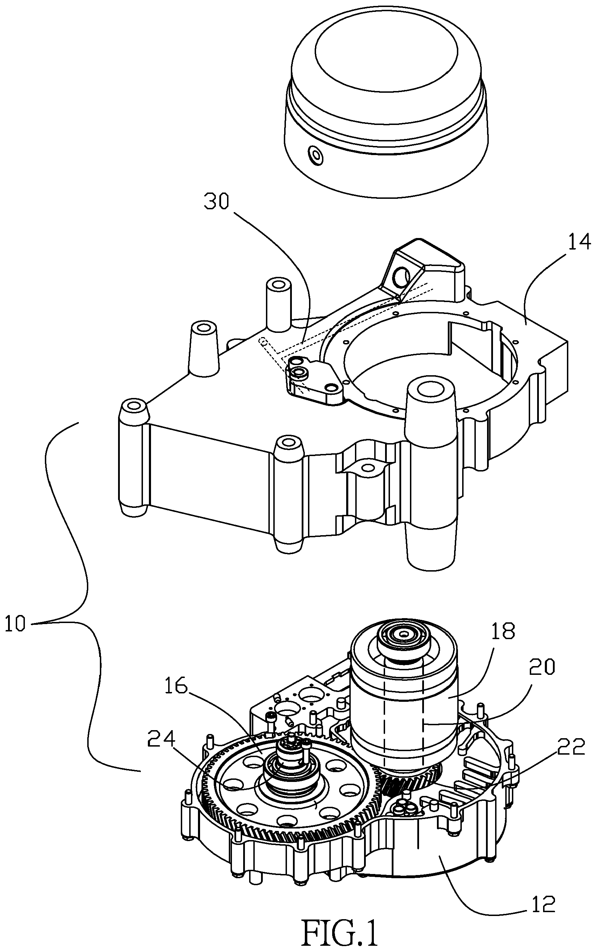

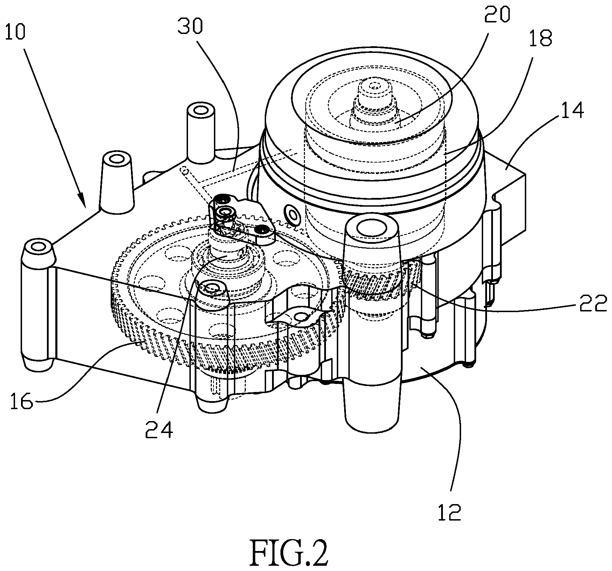

As shown in FIG. 1 and FIG. 2, a power assembly of an electric scooter of the preferred embodiment of the present invention includes a case 10, in which a driven gear 16 and an electric motor 18 are received. The case 10 has a base 12 and a connecting base 14 connected to the base 12. The electric motor 18 has a driving shaft 20 and a driving gear 22 connected to the driving shaft 20. The driving gear 22 is received in the base 12 for free rotation. The driven gear 16 has a driven gear shaft 24, which is received in the base 20 and meshed with the driving gear 22.

The case 12 is provided with a lubrication duct unit for lubricant to flow. The lubrication duct unit includes a case duct 30 formed on an interior side of the case 10. Particularly, the case duct 30 is made by a drilling machine to form a tunnel or a plurality of communicated tunnels in the connecting base 14. In the present preferred embodiment, the case duct unit 30 includes two tunnels forming a T-shaped duct, and an end of the case duct unit 30 extends to the driven gear 12.

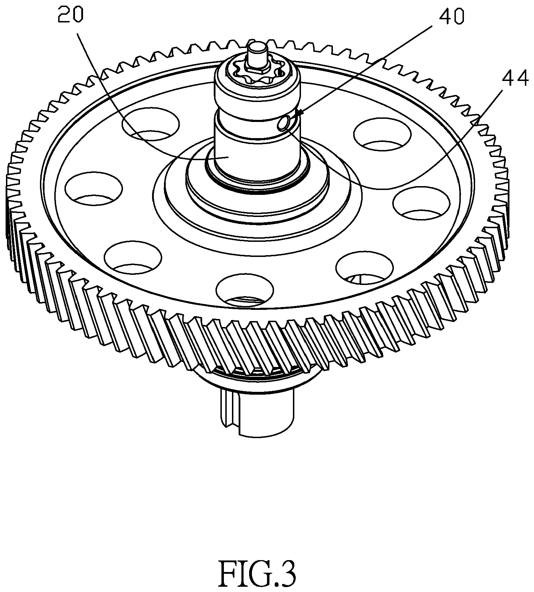

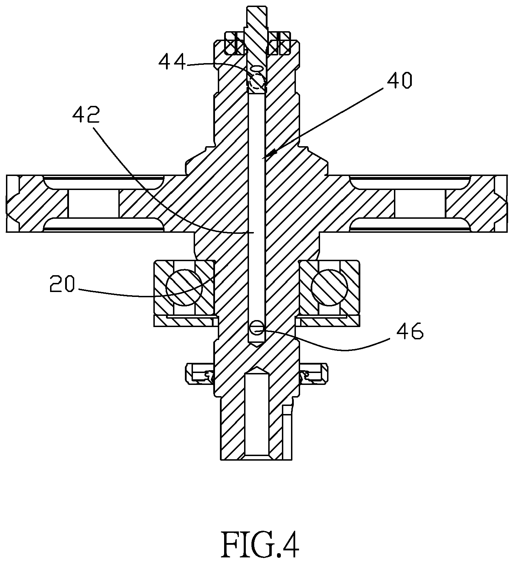

As shown in FIG. 3 and FIG. 4, the lubrication duct unit further includes a driven gear shaft duct 40 in the driven gear shaft 24. The driven gear shaft duct 40 includes an axial section 42, a first bore 44 and a second bore 46. The axial section 42 extends in an axial direction of the driven gear shaft 24, and both the first and the second bores 44, 46 extend in a radial direction and are communicated with the axial section 42. In the present embodiment, the first bore 44 is above the driven gear 20, and the second bore 46 is below the driven gear 20.

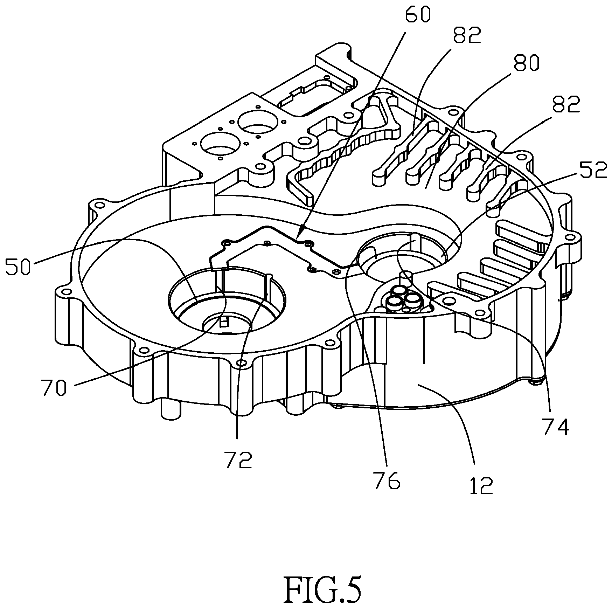

As shown in FIG. 5, the base 12 is provided with a driven gear bearing seat 50 and a driving gear bearing seat 52. In the present embodiment, both the bearing seats 50, 52 are two slots formed on the base and have a bottom respectively. The lubrication duct unit further includes a bearing seat duct 60 formed in the base 12, which has opposite ends communicated with the driven gear bearing seat 50 and the driving gear bearing seat 52.

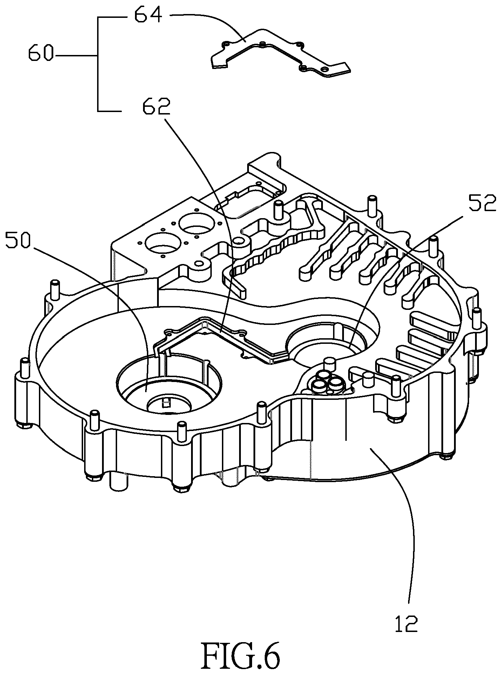

As shown in FIG. 6, the bearing seat duct 60 includes a slot section 62 and a lid 64. The slot section 62 is formed on the bottom of the base 12 and is opened at the bottom. The lid 64 is fixed to the bottom of the base 12 to seal the slot section 62, therefore, the bearing seat duct 60 is formed in the base 12 and has opposite ends communicated with the driven gear bearing seat 50 and the driving gear bearing seat 52.

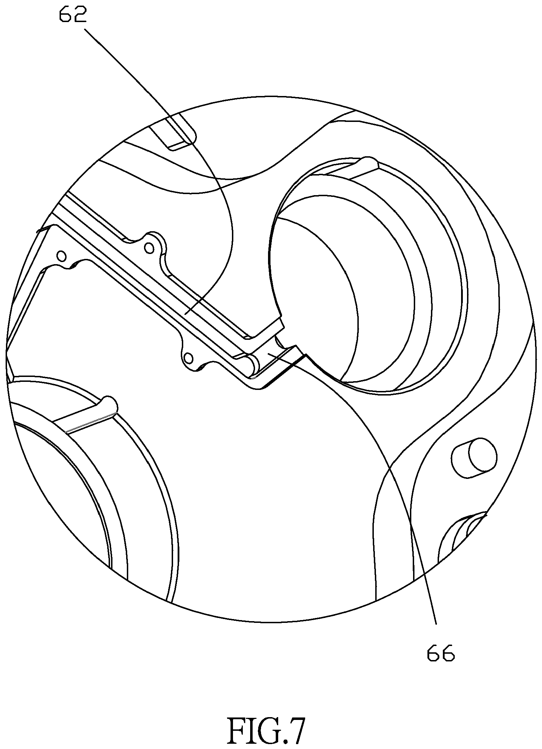

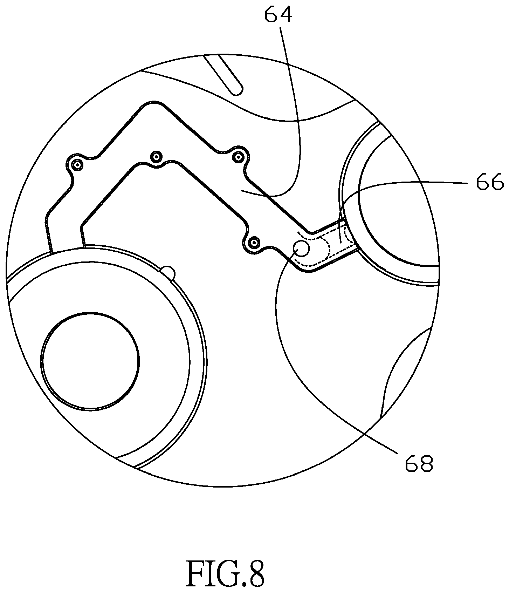

As shown in FIG. 7 and FIG. 8, the slot section 62 is provided with a stepped protrusion 66 on a bottom thereof. The stepped protrusion 66 is adjacent to the driving gear bearing seat 52. The lid 64 is provided with a jet bore 68, and the jet bore 68 is associated with the stepped protrusion 66.

As shown in FIG. 5, the lubrication duct unit further includes a driven gear bearing seat duct 70, which has a section formed on the bottom of the driven gear bearing seat 50 and a section formed on a sidewall thereof. The section of the driven gear bearing seat duct 70 on the sidewall of the driven gear bearing seat 50 is communicated with the bearing seat duct 60. The driven gear bearing seat duct 70 has a first guiding section 72 on the sidewall of driven gear bearing seat 50 and is communicated with the section on the bottom thereof. The first guiding section 72 has an end opened at an upper edge of the driven gear bearing seat 50, in other words, it is opened on the bottom of the base 12.

The lubrication duct unit further includes a driving gear bearing seat duct 76. Similar to the driven gear bearing seat duct 70, the driving gear bearing seat duct 76 has a section formed on the bottom of the driving gear bearing seat 52 and a section formed on a sidewall thereof. The section of the driving gear bearing seat duct 76 on the sidewall of the driving gear bearing seat 52 is communicated with the bearing seat duct 60. The driving gear bearing seat duct 76 has a second guiding section 74 on the sidewall of the driving gear bearing seat 52 and is communicated with the section on the bottom thereof. The second guiding section 74 has an end opened at an upper edge of the driving gear bearing seat 52, in other words, it is opened on the bottom of the base 12.

As shown in FIG. 5, the present embodiment further is provided with a bubble eliminating device 80 on the bottom of the base 12. The bubble eliminating device 80 is beside the driving gear bearing seat 52, and has a plurality of ribs 82. The ribs 82 are parallel to each other and have protrusions on opposite sidewalls.

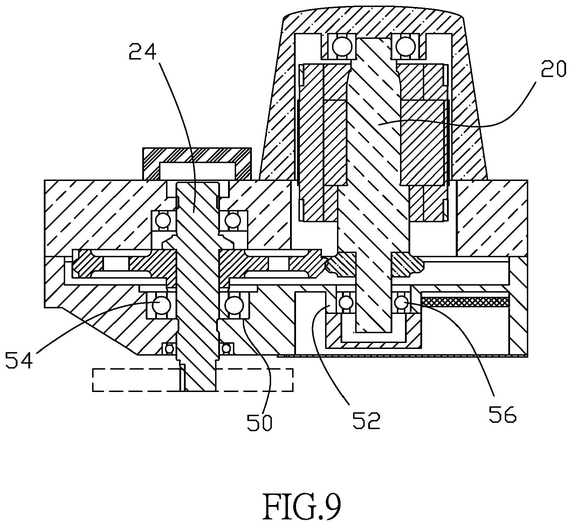

As shown in FIG. 9, a driven bearing 54 is mounted in the driven gear bearing seat 50 and connected to the driven gear shaft 24. A driving gear bearing 56 is mounted in the driving gear bearing seat 52 and connected to the driving shaft 20.

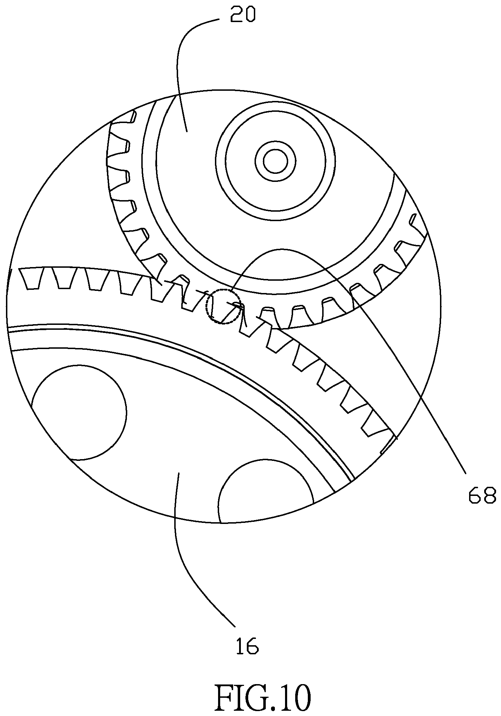

As shown in FIG. 10, the jet bore 68 of the lid 64 is aligned with meshed teeth of the driving gear 22 and the driven gear 16.

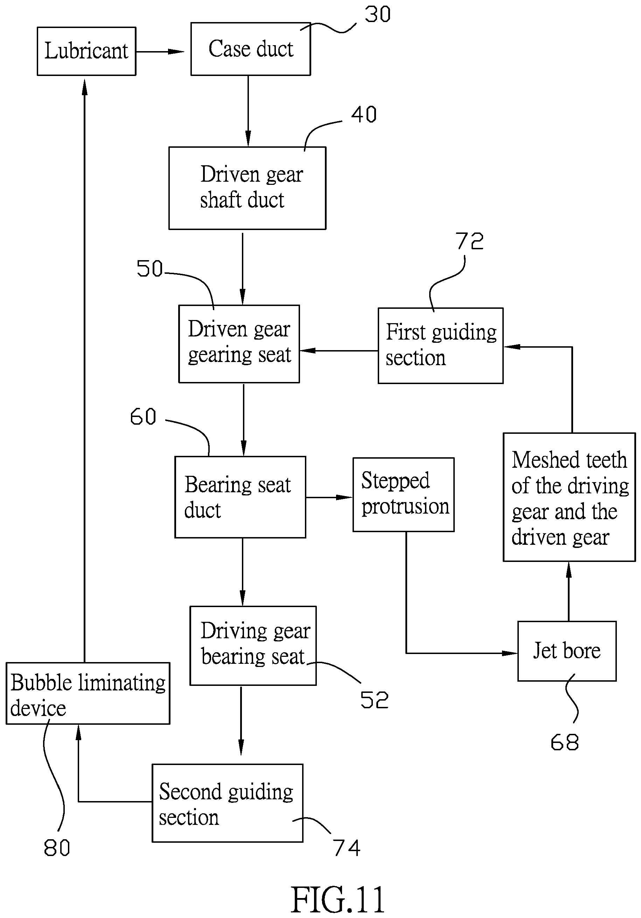

As shown in FIG. 11, when a pump (not shown) pumps lubricant from a tank (not shown), the lubricant flows to the driven gear shaft duct 40 from the case duct 30, and then flows to the driven gear bearing seat 50 through the driven gear bearing seat duct 70. Next, the lubricant flows to the driving gear bearing seat 52 through the bearing seat duct 60 and the driving gear bearing seat duct 76 when the driven gear bearing seat 50 is filled up. After the driving gear bearing seat 52 is filled with the lubricant, the lubricant flows to the bubble eliminating device 80 through the second guiding section 74. The ribs 82 and the protrusions of the bubble eliminating device 80 may eliminate bubbles in the lubricant. Finally, the lubricant will flows back to the case duct 30.

As shown in FIGS. 7, 8, 10, and 11, the lubricant in the bearing seat duct 60 will flows to the meshed teeth of the driving gear 22 and the driven gear 16 through the jet bore 68 of the lid 64. The lubricant will be jetted out of the jet bore 68 because of the stepped protrusion 66. Finally, the lubricant will flows back to the driven gear bearing seat 50 through the first guiding section 72.

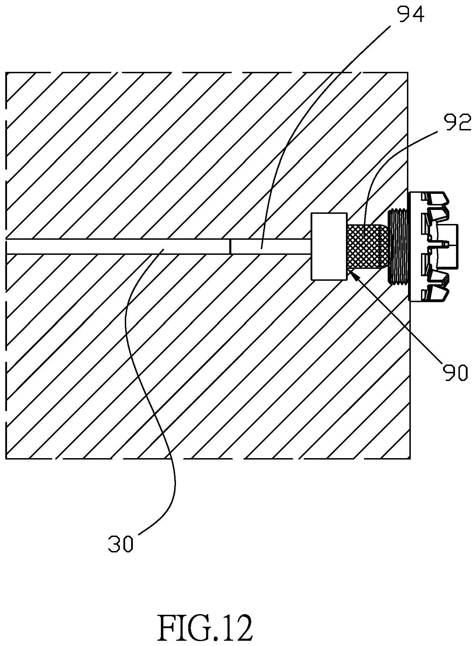

As shown in FIG. 12, the present embodiment further is provided with a filter device 90. The filter device 90 has a filter 92 and a pipe 94 connected to the filter 92. A distal end of pipe 94 extends to the case duct 30. The pump deliveries the lubricant to the filter 92 to filter it, and then the lubricant flows to the case duct 30 through the pipe 94.

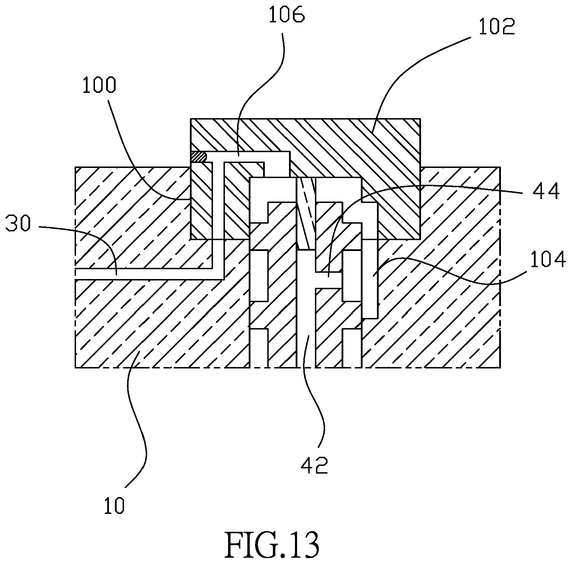

As shown in FIG. 13, the case 10 is provided with a slot 100, and a cover 102 is inserted into the slot 100. The case 10 is provided with a third guiding slot 104 on a sidewall of the slot 100, and the cover 102 has a cover duct 106 therein. An end of the cover duct 106 is communicated with the case duct 30, and the other end thereof is communicated with the axial section 42 of the driven gear shaft duct 40. The axial section 42 of the driven gear shaft duct 40 is communicated with the third guiding slot 104 through the first bore 44.

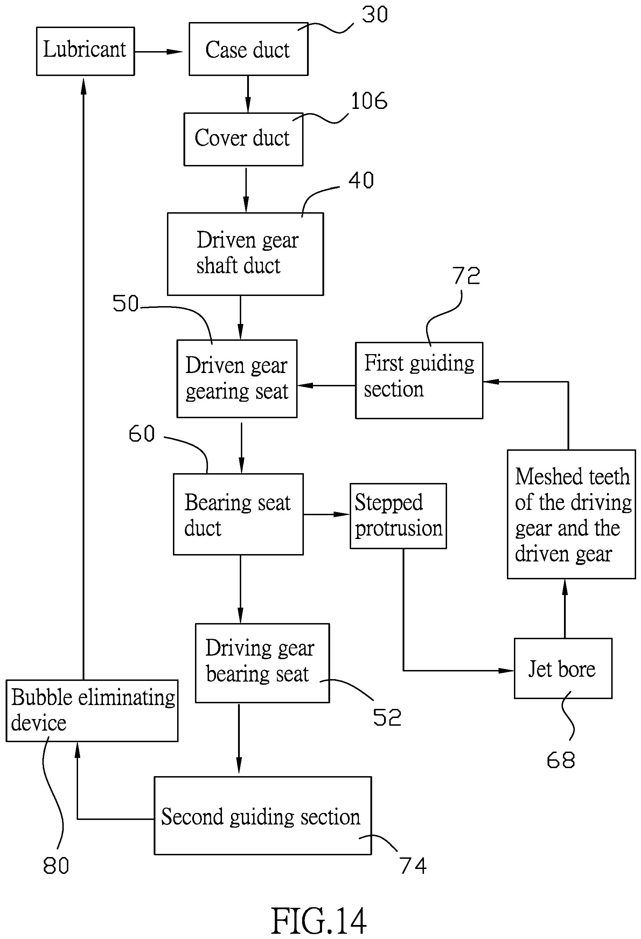

As shown in FIG. 14, the lubricant flows to the cover duct 106 from the case duct 30, and then flows to the axial section 42 of the driven gear shaft duct 40 through the third guiding slot 104 and the first bore 44. Next, the lubricant flows to the driven gear bearing seat 50 through the second bore 46. When the driven gear bearing seat 50 is filled up, the lubricant flows to the driving gear bearing seat 52 through the bearing seat duct 60. Next, the lubricant flows to the bubble eliminating device 80 through the second guiding section 74 when the driving gear bearing seat 52 is filled up as described above.

In conclusion, the electric motor 18 and the driven gear 16 are integrated in the case 10, so the lubricant flowing distance is shorter than the prior art to increase the effects of lubrication and reducing temperature. The present invention provides the jet bore 68 to jet the lubricant directly to the meshed teeth of the driving gear 22 and the driven gear 16 to enhance the lubrication effect.

In addition, the ribs 82 and the protrusions on the ribs 82 of the bubble eliminating device 80 may eliminate bubbles in the lubricant quickly that is helpful to the lubrication, and the driven gear bearing seat 50 and the driving gear bearing seat 52 are filled with the lubricant that are helpful to lubrication.

## Claims

1. A lubrication system of a power assembly of an electric scooter, wherein the power assembly includes a case (10), in which a driven gear bearing seat (50) and a driving gear bearing seat (52) are provided; a driven gear (16) has a driven gear shaft (24) and a driven gear bearing (54) on the driven gear shaft (24), and a driving gear (22) has a driving gear shaft (20) and a driving gear bearing (56) on the driving gear shaft (20); the driven gear (16) is received in the driven gear bearing seat (50), and the driving gear (22) is received in the driving gear bearing seat (52); and the driven gear (22) meshes with the driving gear (22);
the lubrication system being **characterized in that** it comprises:
a case duct (30) provided in the case (10);
a driven gear shaft duct (40) having an axial section (42), a first bore (44), and a second bore (46) in the driven gear shaft (24) of the driven gear (16), wherein the axial section (42) extends in an axial direction of the driven gear shaft (24) while the first bore (44) and the second bore (46) extend in a radial direction of the driven gear shaft (24); both the first bore (44) and the second bore (46) are communicated with the axial section (42); the axial section (42) is communicated with the case duct (30) through the first bore (44) and communicated with the driven gear bearing seat (50) through the second bore (46); and
a bearing seat duct (60) provided in the case (10) and having opposite ends connected to the driven gear bearing seat (50) and the driving gear bearing seat (52) respectively;
wherein a lubricant flows through the case duct (30), the first bore (44), the axial section (42), the second bore (46), the driven gear bearing seat (50), the bearing seat duct (60), and the driving gear bearing seat (52) in sequence.

2. The lubrication system of claim 1, further comprising a driven gear bearing seat duct (70) having a section on a bottom of the driven gear bearing seat (50) and a section on a sidewall thereof, wherein the section on the sidewall is communicated with the bearing seat duct (60).

3. The lubrication system of claim 2, wherein the driven gear bearing seat duct (70) further having a first guiding section (72) on the sidewall of the driven gear bearing seat (50), and the first guiding section (72) has an end opened at an upper edge of the driven gear bearing seat (50).

4. The lubrication system of claim 1, wherein the bearing seat duct (60) includes a slot section (62) formed on the case (10) and a lid (64) connected to the case (10) to seal the slot section (62).

5. The lubrication system of claim 4, wherein the bearing seat duct (60) further includes a stepped protrusion (66) in the slot section (62) and a jet bore (68) on the lid (64); the stepped protrusion (66) is adjacent to the jet bore (68), and the jet bore (68) is aligned with meshed teeth of the driven gear (16) and the driving gear (22).

6. The lubrication system of claim 1, further comprising a driving gear bearing seat duct (76) having a section on a bottom of the driving gear bearing seat (52) and a section on a sidewall thereof, wherein the section on the sidewall is communicated with the bearing seat duct (60), and the driving gear bearing seat (52) duct further having a second guiding section (74) on the sidewall of the driving gear bearing seat (52), and the second guiding section (74) has an end opened at an upper edge of the driving gear bearing seat (52).

7. The lubrication system of claim 1, wherein the case (10) is provided with a bubble eliminating device (80) beside the driving gear bearing seat (52); the lubricant flows to the bubble eliminating device (80) from the driving gear bearing seat (52).

8. The lubrication system of claim 7, wherein the bubble eliminating device (80) includes a plurality of ribs (82) on the case (10) and protrusions on the ribs (82).

9. The lubrication system of claim 1, further comprising a filter device (90) provided on the case (10) in associated with the case duct (30), wherein the filter device (90) has a filter (92) and a pipe (94), and the pipe (94) has opposite end connected to the filter (92) and the case duct (30).

10. The lubrication system of claim 1, wherein the case (10) further has a slot (100), a cover (102) engaging the slot (100), and a third guiding section (104) on a sidewall of the slot (100); the cover (102) is provided with a cover duct (106) therein; the cover duct (106) is communicated with the case duct (30) and the third guiding section (104) respectively; and the third guiding section (104) is communicated with the first bore (44) of the driven gear shaft duct (40).

## Patentansprüche

1. Schmiersystem einer Leistungsbaugruppe eines Elektrorollers, wobei die Leistungsbaugruppe ein Gehäuse (10) umfasst, in welchem ein Abtriebszahnradlagersitz (50) und ein Antriebszahnradlagersitz (52) vorgesehen sind; wobei ein Abtriebszahnrad (16) eine Abtriebszahnradwelle (24) und ein Abtriebszahnradlager (54) auf der Abtriebszahnradwelle (24) aufweist, und ein Antriebszahnrad (22) eine Antriebszahnradwelle (20) und ein Antriebszahnradlager (56) auf der Antriebszahnradwelle (20) aufweist; das Abtriebszahnrad (16) im Abtriebszahnradlagersitz (50) aufgenommen ist, und das Antriebszahnrad (22) im Antriebszahnradlagersitz (52) aufgenommen ist; und das Abtriebszahnrad (22) mit dem Antriebszahnrad (22) im Eingriff ist;
wobei das Schmiersystem **dadurch gekennzeichnet ist, dass** es umfasst:
einen Gehäusekanal (30), der im Gehäuse (10) vorgesehen ist;
einen Abtriebszahnradwellenkanal (40) mit einem axialen Abschnitt (42), einer ersten Bohrung (44) und einer zweiten Bohrung (46) in der Abtriebszahnradwelle (24) des Abtriebszahnrads (16), wobei der axiale Abschnitt (42) sich in einer axialen Richtung der Abtriebszahnradwelle (24) erstreckt, während die erste Bohrung (44) und die zweite Bohrung (46) sich in einer radialen Richtung der Abtriebszahnradwelle (24) erstrecken; sowohl die erste Bohrung (44) als auch die zweite Bohrung (46) mit dem axialen Abschnitt (42) in Verbindung stehen; und der axiale Abschnitt (42) durch die erste Bohrung (44) mit dem Gehäusekanal (30) in Verbindung steht und durch die zweite Bohrung (46) mit dem Abtriebszahnradlagersitz (50) in Verbindung steht; und
einen Lagersitzkanal (60), der im Gehäuse (10) vorgesehen ist und gegenüberliegende Enden aufweist, die mit dem Abtriebszahnradlagersitz (50) bzw. dem Antriebszahnradlagersitz (52) verbunden sind;
wobei ein Schmiermittel der Reihe nach durch den Gehäusekanal (30), die erste Bohrung (44), den axialen Abschnitt (42), die zweite Bohrung (46), den Abtriebszahnradlagersitz (50), den Lagersitzkanal (60) und den Antriebszahnradlagersitz (52) fließt.

2. Schmiersystem nach Anspruch 1, ferner umfassend einen Abtriebszahnradlagersitzkanal (70) mit einem Abschnitt auf einer Unterseite des Abtriebszahnradlagersitzes (50) und einem Abschnitt auf einer Seitenwand davon, wobei der Abschnitt auf der Seitenwand mit dem Lagersitzkanal (60) in Verbindung steht.

3. Schmiersystem nach Anspruch 2, wobei der Abtriebszahnradlagersitzkanal (70) ferner einen ersten Führungsabschnitt (72) auf der Seitenwand des Abtriebszahnradlagersitzes (50) aufweist, und der erste Führungsabschnitt (72) ein Ende aufweist, das an einer oberen Kante des Abtriebszahnradlagersitzes (50) geöffnet ist.

4. Schmiersystem nach Anspruch 1, wobei der Lagersitzkanal (60) einen Schlitzabschnitt (62), der auf dem Gehäuse (10) ausgebildet ist, und einen Deckel (64), der mit dem Gehäuse (10) verbunden ist, zum Schließen des Schlitzabschnitts (62) umfasst.

5. Schmiersystem nach Anspruch 4, wobei der Lagersitzkanal (60) ferner einen abgestuften Vorsprung (66) im Schlitzabschnitt (62) und eine Düsenbohrung (68) auf dem Deckel (64) umfasst; der abgestufte Vorsprung (66) benachbart zur Düsenbohrung (68) ist, und die Düsenbohrung (68) mit in Eingriff stehenden Zähnen des Abtriebszahnrads (16) und des Antriebszahnrads (22) ausgerichtet ist.

6. Schmiersystem nach Anspruch 1, ferner umfassend einen Antriebszahnradlagersitzkanal (76) mit einem Abschnitt auf einer Unterseite des Antriebszahnradlagersitzes (52) und einem Abschnitt auf einer Seitenwand davon, wobei der Abschnitt auf der Seitenwand mit dem Lagersitzkanal (60) in Verbindung steht, und der Kanal des Antriebszahnradlagersitzes (52) ferner einen zweiten Führungsabschnitt (74) auf der Seitenwand des Antriebszahnradlagersitzes (52) aufweist, und der zweite Führungsabschnitt (74) ein Ende aufweist, das an einer oberen Kante des Antriebszahnradlagersitzes (52) geöffnet ist.

7. Schmiersystem nach Anspruch 1, wobei das Gehäuse (10) mit einer Blasenentfernungseinrichtung (80) neben dem Antriebszahnradlagersitz (52) versehen ist; wobei das Schmiermittel aus dem Antriebszahnradlagersitz (52) zur Blasenentfernungseinrichtung (80) fließt.

8. Schmiersystem nach Anspruch 7, wobei die Blasenentfernungseinrichtung (80) eine Mehrzahl von Rippen (82) auf dem Gehäuse (10) und Vorsprünge auf den Rippen (82) umfasst.

9. Schmiersystem nach Anspruch 1, ferner umfassend eine Filtereinrichtung (90), die auf dem Gehäuse (10) vorgesehen und mit dem Gehäusekanal (30) verbunden ist, wobei die Filtereinrichtung (90) ein Filter (92) und ein Rohr (94) aufweist, und das Rohr (94) ein gegenüberliegendes Ende aufweist, das mit dem Filter (92) und dem Gehäusekanal (30) verbunden ist.

10. Schmiersystem nach Anspruch 1, wobei das Gehäuse (10) ferner einen Schlitz (100), eine Abdeckung (102), die in den Schlitz (100) eingreift, und einen dritten Führungsabschnitt (104) auf einer Seitenwand des Schlitzes (100) aufweist; die Abdeckung (102) mit einem Abdeckungskanal (106) darin versehen ist; der Abdeckungskanal (106) mit dem Gehäusekanal (30) bzw. dem dritten Führungsabschnitt (104) in Verbindung steht; und der dritte Führungsabschnitt (104) mit der ersten Bohrung (44) des Abtriebszahnradwellenkanals (40) in Verbindung steht.

## Revendications

1. Système de lubrification d'un ensemble de puissance d'un scooter électrique, l'ensemble de puissance comprenant un carter (10), dans lequel un siège de palier d'engrenage entraîné (50) et un siège de palier d'engrenage d'entraînement (52) sont disposés ; un engrenage entraîné (16) a un arbre d'engrenage entraîné (24) et un palier d'engrenage entraîné (54) sur l'arbre d'engrenage entraîné (24), et un engrenage d'entraînement (22) a un arbre d'engrenage d'entraînement (20) et un palier d'engrenage d'entraînement (56) sur l'arbre d'engrenage d'entraînement (20) ; l'engrenage entraîné (16) est reçu dans le siège de palier d'engrenage entraîné (50), et l'engrenage d'entraînement (22) est reçu dans le siège de palier d'engrenage d'entraînement (52) ; et l'engrenage entraîné (22) s'engrène avec l'engrenage d'entraînement (22) ;
le système de lubrification étant **caractérisé par le fait qu'**il comprend :
un conduit de carter (30) disposé dans le carter (10) ;
un conduit d'arbre d'engrenage entraîné (40) ayant une section axiale (42), un premier alésage (44), et un second alésage (46) dans l'arbre d'engrenage entraîné (24) de l'engrenage entraîné (16), la section axiale (42) s'étendant dans une direction axiale de l'arbre d'engrenage entraîné (24) tandis que le premier alésage (44) et le second alésage (46) s'étendent dans une direction radiale de l'arbre d'engrenage entraîné (24) ; à la fois le premier alésage (44) et le second alésage (46) communiquant avec la section axiale (42) ; la section axiale (42) communiquant avec le conduit de carter (30) par le premier alésage (44) et communiquant avec le siège de palier d'engrenage entraîné (50) par le second alésage (46) ; et
un conduit de siège de palier (60) disposé dans le carter (10) et ayant des extrémités opposées reliées au siège de palier d'engrenage entraîné (50) et au siège de palier d'engrenage d'entraînement (52), respectivement ;
un lubrifiant s'écoulant à travers le conduit de carter (30), le premier alésage (44), la section axiale (42), le second alésage (46), le siège de palier d'engrenage entraîné (50), le conduit de siège de palier (60) et le siège de palier d'engrenage d'entraînement (52) en séquence.

2. Système de lubrification selon la revendication 1, comprenant en outre un conduit de siège de palier d'engrenage entraîné (70) ayant une section sur une partie inférieure du siège de palier d'engrenage entraîné (50) et une section sur une paroi latérale de celui-ci, la section sur la paroi latérale communiquant avec le conduit de siège de palier (60).

3. Système de lubrification selon la revendication 2, dans lequel le conduit de siège de palier d'engrenage entraîné (70) comprend en outre une première section de guidage (72) sur la paroi latérale du siège de palier d'engrenage entraîné (50), et la première section de guidage (72) a une extrémité ouverte à un bord supérieur du siège de palier d'engrenage entraîné (50).

4. Système de lubrification selon la revendication 1, dans lequel le conduit de siège de palier (60) comprend une section de fente (62) formée sur le carter (10) et un couvercle (64) relié au carter (10) pour sceller la section de fente (62).

5. Système de lubrification selon la revendication 4, dans lequel le conduit de siège de palier (60) comprend en outre une saillie étagée (66) dans la section de fente (62) et un alésage de buse (68) sur le couvercle (64) ; la saillie étagée (66) est adjacente à l'alésage de buse (68), et l'alésage de buse (68) est aligné avec des dents engrenées de l'engrenage entraîné (16) et de l'engrenage d'entraînement (22).

6. Système de lubrification selon la revendication 1, comprenant en outre un conduit de siège de palier d'engrenage d'entraînement (76) ayant une section sur une partie inférieure du siège de palier d'engrenage d'entraînement (52) et une section sur une paroi latérale de celui-ci, la section sur la paroi latérale communiquant avec le conduit de siège de palier (60), et le conduit du siège de palier d'engrenage d'entraînement (52) ayant en outre une deuxième section de guidage (74) sur la paroi latérale du siège de palier d'engrenage entraînement (52), et la deuxième section de guidage (74) ayant une extrémité ouverte à un bord supérieur du siège de palier d'engrenage d'entraînement (52).

7. Système de lubrification selon la revendication 1, dans lequel le carter (10) comporte un dispositif d'élimination de bulles (80) à côté du siège de palier d'engrenage d'entraînement (52) ; le lubrifiant s'écoule jusqu'au dispositif d'élimination de bulles (80) à partir du siège de palier d'engrenage d'entraînement (52).

8. Système de lubrification selon la revendication 7, dans lequel le dispositif d'élimination de bulles (80) comprend une pluralité de nervures (82) sur le carter (10) et des saillies sur les nervures (82).

9. Système de lubrification selon la revendication 1, comprenant en outre un dispositif de filtre (90) disposé sur le carter (10) en association avec le conduit de carter (30), le dispositif de filtre (90) ayant un filtre (92) et un tuyau (94), et le tuyau (94) ayant des extrémités opposées reliées au filtre (92) et au conduit de carter (30).

10. Système de lubrification selon la revendication 1, dans lequel le carter (10) a en outre une fente (100), un capot (102) s'engageant avec la fente (100), et une troisième section de guidage (104) sur une paroi latérale de la fente (100) ; le capot (102) comprend un conduit de capot (106) à l'intérieur de celui-ci ; le conduit de capot (106) communiquant avec le conduit de carter (30) et la troisième section de guidage (104), respectivement ; et la troisième section de guidage (104) communiquant avec le premier alésage (44) du conduit d'arbre d'engrenage entraîné (40).
